**Europäisches Patentamt**

(19) **European Patent Office**

**Office européen des brevets**

(11) **EP 0 397 458 B1**

## (12) EUROPEAN PATENT SPECIFICATION

(45) Date of publication and mention
of the grant of the patent:
**27.03.1996 Bulletin 1996/13**

(51) Int. Cl.$^6$: **A01G 9/24**

(21) Application number: **90304958.3**

(22) Date of filing: **08.05.1990**

(54) **Method of and apparatus for reducing the heat load on a greenhouse**

Verfahren und Vorrichtung zur Verminderung der Heizbelastung eines Gewächshauses

Méthode et appareil pour réduire la charge thermique d'une serre

(84) Designated Contracting States:
**AT BE DE ES FR GB IT NL**

(30) Priority: **11.05.1989 US 350449**

(43) Date of publication of application:
**14.11.1990 Bulletin 1990/46**

(73) Proprietors:
• **ORMAT INDUSTRIES, LTD.**
**Yavne 70650 (IL)**
• **Assaf, Gad**
**Rehovot (IL)**

(72) Inventors:
• **Assaf, Gad**
**Rehovot (IL)**
• **Doron, Benjamin**
**Jerusalem (IL)**

(74) Representative: **Godwin, Edgar James et al**
**MARKS & CLERK,**
**57-60 Lincoln's Inn Fields**
**London WC2A 3LS (GB)**

(56) References cited:
**EP-A- 0 038 213**     **EP-A- 0 123 447**
**US-A- 4 305 235**     **US-A- 4 685 617**
**US-A- 4 819 447**

## Description

This application generally relates to apparatus for reducing the heat load on a greenhouse during periods of low light levels, and more particularly is concerned with reducing the night-time heat load on a greenhouse.

Agricultural products, such as vegetables and flowers, are grown on a large scale in greenhouses throughout the world. During daylight hours, the agricultural products growing in a greenhouse introduce water vapor into the greenhouse and extract carbon dioxide from the air therein. Often, the addition of heat to a greenhouse on a daily basis is required, depending on geographical location and season of the year. In some locations, heat is needed only at night.

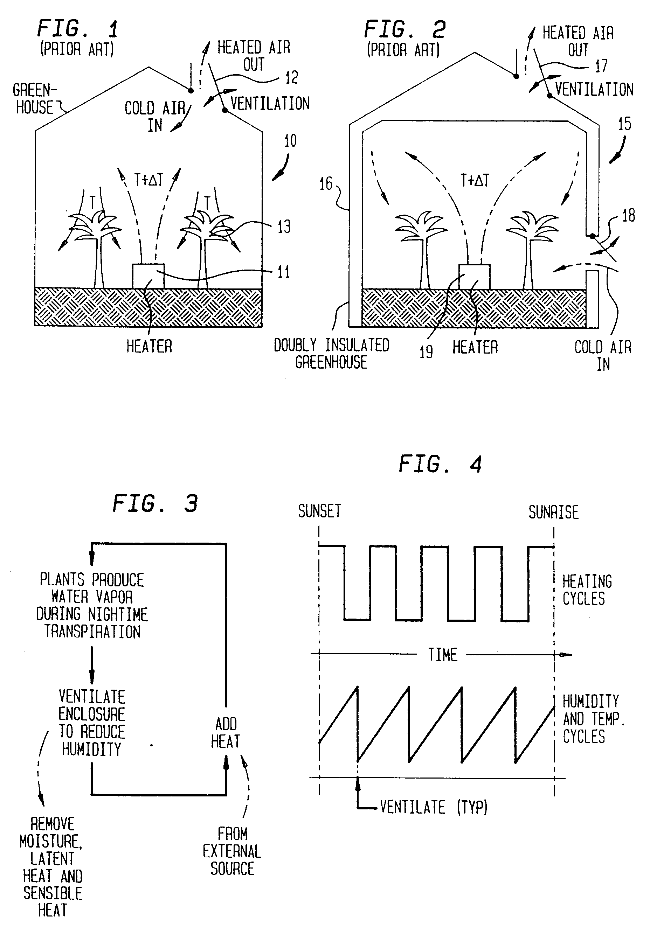

To reduce the heat load on a greenhouse, it is conventional to seal the greenhouse with plastic film to obtain a reasonably insulated structure at a moderate price. This situation is illustrated in Fig. 1, which shows the provision of a conventional space heater in a greenhouse for the purpose of heating the greenhouse. An improved arrangement is shown in Fig. 2, wherein the greenhouse is doubly insulated with plastic film. Regardless of the degree of insulation, experience shows that, in heated greenhouses at night, the plants are often warmer than the ambient air outside the greenhouse and the humidity level inside the greenhouse is considerably elevated due to the transpiration rate of the plants even in their quiescent state under conditions of low light intensity. The more securely a greenhouse is sealed, the greater is the enhancement of condensation heat flux to the walls of the greenhouse and the cold portions of the plants. In order to inhibit plant diseases due to high humidity conditions, removal of excess water vapor is achieved by periodic ventilation of the greenhouse during the night. Such conditions also occur during periods of rather cold weather when the light level is low.

During ventilation of a greenhouse, buoyant warm, moist air adjacent the ceiling of the greenhouse is removed through a selectively operable vent in the ceiling, this air being replaced by the colder, more dense outside air that flows toward the floor and the plants in the greenhouse. The humidity inside the greenhouse is thus reduced, but at a cost of a reduction in temperature inside the greenhouse. To maintain a suitable temperature for the growing plants, heaters are provided and operated to return the internal temperature of the greenhouse to a suitable level. Often, heating of the enclosure air as well as venting is repeated cyclically during the night-time or such periods as suggested in Fig. 4 which is a highly idealized time chart showing the cyclical heating and cooling of the interior of such a greenhouse. In the chart in the upper portion of Fig. 4, the operation of the heater is shown; and, the chart in the lower portion of Fig. 4 shows the resultant cyclical changes in humidity and temperature inside the greenhouse on the basis that ventilation occurs periodically.

From actual experience, the heat load on the greenhouse is not inconsequential. This can be appreciated by considering that the moist air removed during ventilation contains a considerable amount of heat that is lost to the atmosphere: the latent heat contained in the vented vapor, and the sensible heat in the air. This lost heat must be replaced by a heater.

The heat load on the greenhouse can be reduced by utilizing direct contact air-brine-vapor heat exchangers in the greenhouses for the purpose of reducing humidity an which may be used in the manner described below. During the day, brine in the heat exchanger will be hygroscopic because the vapor pressure at the air/brine interface at a given temperature will be less than the vapor pressure of vapor in the air at the same temperature. This approach to a more efficient use of the latent condensation of the vapor in a greenhouse is disclosed in U.S. Patent No. 4,707,995 granted November 24, 1987, and in U.S. Patent No. 4,819,447 granted April 11, 1989, the subject matter of these patents being hereby incorporated by reference. These patents disclose temporarily storing, in the brine present in the enclosure, latent heat liberated by the condensation of vapor on the brine, and contacting the air in the enclosure with the brine during the night when the air in the enclosure normally will be cooler than the brine. Heat extracted from the greenhouse during the day and temporarily stored in the brine is thus transferred, at night, back to the air in the enclosure by a reduction in the sensible heat of the brine. Such an approach can also be taken during periods of rather cold weather and also during periods of low light levels.

While this approach provides a reduction in the heat load on the greenhouse, it also raises the possibility that the brine used in the greenhouse at night be at a temperature such that the brine will not be hygroscopic. As a consequence, while the heat extracted from the greenhouse during the day by the condensation of water vapor on concentrated brine is stored and returned to the enclosure at night, additional humidity may be introduced into the greenhouse at night by the evaporation of water from the brine. In such a situation, ventilation at night would be required to also remove such extra water vapor and to maintain the humidity in the greenhouse at a level which inhibits various types of plant diseases.

Much effort has been expended in efforts to reduce the heat loads in greenhouses occasioned by the necessity for their periodic ventilation. It is therefore an object of the present invention to provide a new and improved apparatus for reducing the heat load on a greenhouse, particularly during periods of low light levels.

A further object of the present invention is to reduce the heat load on a greenhouse containing plants by reducing the buoyancy flux in the enclosure, which is the rate of flow of air across the canopy of the plants due to thermal (convective) air currents in the enclosure. It has been found, experimentally, that the transpiration of plants in an enclosure and thus the amount of moisture the plants introduce into the air can be reduced by reducing the rate of convective flow across the canopy of the plants.

US-A-4 685 617 discloses apparatus according to the pre-characterising part of claim 1.

The present invention provides apparatus as defined in claim 1.

A reduction in the convective flow across the canopy of the plants is achieved by eliminating or significantly reducing venting of the greenhouse during periods of low light levels such as at night-time, and by heating and dehumidifying the air in the greenhouse during these periods.

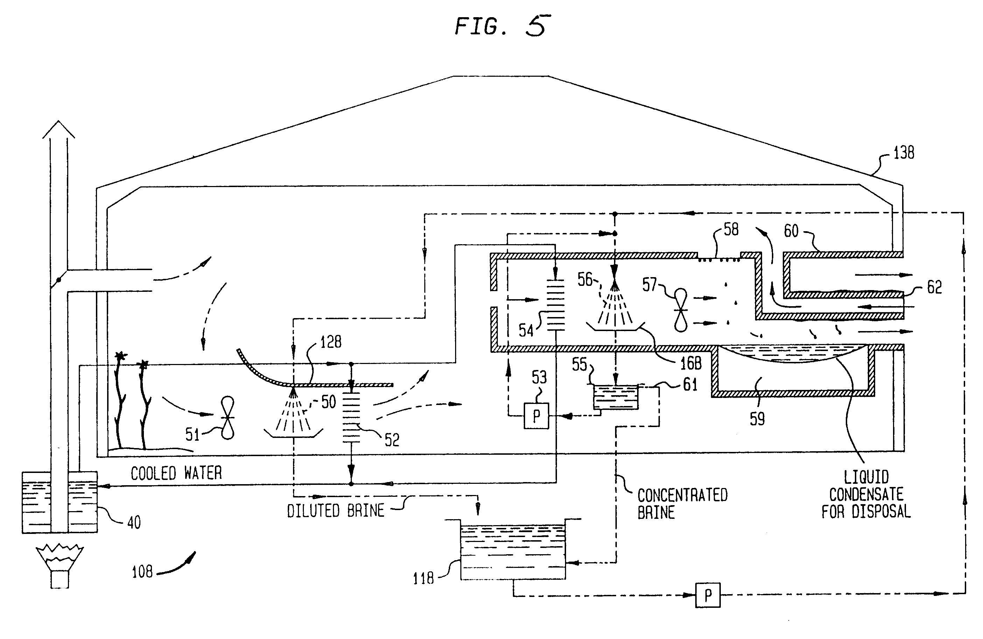

A preferred embodiment of the present invention is disclosed in Figure 5 of the accompanying drawings, wherein:-

Fig. 1 represents a conventional greenhouse provided with the usual type of sealing features;

Fig. 2 represents what is termed a doubly-sealed greenhouse of conventional design;

Fig. 3 is a flow chart illustrating the positive feedback situation that exists during periods of low light levels, such as at night, whereby the transpiration of plants during such periods increases the humidity and requires ventilation to reduce the humidity, the ventilation requires the addition of heat from an external source which itself increases the convective heat flow through the canopy of the plants encouraging further transpiration, and the further transpiration produces the need for further ventilation;

Fig. 4 represents two charts showing heating cycles, and showing humidity and temperature cycles in a greenhouse as a consequence of the periodic venting and heating of the greenhouse during periods of low light levels such as at night; and

Fig. 5 is a schematic diagram of a greenhouse for the purpose of illustrating the control of the environment in apparatus according to the present invention.

## DETAILED DESCRIPTION

Referring now to Fig. 1, reference numeral 10 designates a conventional greenhouse having a single layer of plastic film or glass insulation, a conventional heating unit 11 located at ground level, and a conventional ventilation system in the form of a selectively operable flap 12 in the ceiling of the greenhouse. Plants 13 are shown growing at ground level in the greenhouse. For reference purposes, substantially the total height of the plants including the flower buds and leaves, when flowers are concerned, or the total height of the fruits or vegetables and leaves, when fruit or vegetables are concerned, constitute what is termed herein-after the "plant canopy".

Preferably, a control system (not shown) is utilized for the purpose of selectively operating flap 12 to effect the venting of the greenhouse. When the flap is opened, warm, moist air in the upper reaches of the greenhouse rises through the opening in the ceiling and is replaced by cooler, more dense and drier air that flows downwardly.

Reference character 15 in Fig. 2 shows a well insulated greenhouse in that a double layer 16 of plastic film or glass is used. This type of greenhouse is typically provided with selectively operable ceiling vent 17 and side inlet 18. Ground level heater 19 is provided to heat the greenhouse as a consequence of its periodic ventilation to reduce the humidity.

Investigation has revealed that in greenhouses constructed in accordance with the configuration shown in Fig. 1, a relatively small amount of ventilation during periods of low light levels such as at night is required, but there is a large amount of condensation on the wall of the greenhouse, and the rate of plant transpiration is relatively large.

For greenhouses configured as shown in Fig. 2, a relatively large amount of ventilation during periods of low light levels such as at night is required, and the transpiration rate is relatively large. In both cases, the heat load on the greenhouse is relatively large because of the ventilation required to maintain the humidity during such periods at acceptable levels for plant health. Such ventilation exhausts latent and sensible heat from the greenhouse which must be replaced by heating.

Experimental investigation has revealed that plant transpiration during periods of low light levels is highly correlated with the buoyancy flux in the greenhouse. The term "buoyancy flux" generally refers to the rate of convective heat flow of air through the plant canopy. More technically, the buoyancy flux is a measure of the mechanical kinetic energy of the air generated by thermal convection across the plant canopy per unit air mass through which warm air rises and cold air falls. The buoyancy flux B is given by:

$$B = (g) \, \overline{[w'T']}/T \qquad (1)$$

where

g is the gravitational constant;

T is enclosure air temperature ( K);

w' is a fluctuation in vertical air velocity w, where

$$w' = \overline{w} + w';$$

T' is a fluctuation in air temperature T, where

$$T = \overline{T} + T';$$

$\overline{X}$ means the average of X over time; and $\overline{[w'T']}$ means w' multiplied by T' averaged over time.

Plants in a greenhouse with the configuration of Fig. 1, will produce more water vapor than plants in a greenhouse with the configuration shown in Fig. 2 under low light level conditions in the same environment. The conventional approach to reducing humidity in the greenhouses only exacerbates matters and increases the heating requirements of the greenhouses as seen from the positive feedback mechanism illustrated in Fig. 3. The plants produce water vapor during periods of low light levels such as at night increasing the humidity to unhealthy levels, ventilation of the greenhouse is required to reduce humidity to acceptable levels removing latent heat contained in the vapor that is vented as well as sensible heat in both the vapor and the air, heating is required to replace the heat lost to the atmosphere by the venting of the greenhouse, and the plants are encouraged to produce more water vapor by the convective air flow through the plant canopy as the air currents in the greenhouse stabilize following the venting and heating operations. Fig. 4 shows the cyclical nature of the heating and ventilating cycles of a greenhouse. The result is a situation that feeds upon itself and results in added stress on the plants and a large heat load on the greenhouse.

The problem has been determined to be the result of the buoyancy flux in the greenhouses. That is to say, the buoyancy flux in the configuration of Fig. 1 is relatively higher than the buoyancy flux in the configuration of Fig. 2. From actual experiments, it has been found that in similar greenhouses with the same environmental conditions, the buoyancy flux of the greenhouse that is less insulated and thus requires more heating, will be larger and the plants will produce more water vapor.

Reducing the buoyancy flux in a greenhouse, i.e., reducing the rate of flow of air across the canopy of the growing plants, due to thermal air currents during periods of low light levels, will reduce the heat load on the greenhouse during these periods. In order to reduce the buoyancy flux, the greenhouse should be well insulated (thereby reducing the amount of heat that must be supplied to the greenhouse), moisture should be removed from the greenhouse by a latent heat converter, thereby reducing the need to ventilate the greenhouse. Plant transpiration under low light levels conditions will be reduced thereby creating a negative feedback situation that will reduce the heat load on the greenhouse.

The latent heat converter is an air-brine-vapor heat exchanger of the type disclosed in U.S. Patent Nos. 4,707,995, 4,803,846, or 4,819,447, or of the type disclosed in U.S. Patent Applications Ser. No. 780,285 filed September 26, 1985, or Ser. No. 316,915 filed February 28, 1989, the disclosures of all of which are hereby incorporated by reference. In such a heat exchanger, concentrated brine in a reservoir is applied as a thin film over a screen arrangement though which air from the greenhouse passes. Being hygroscopic, water vapor in the air condenses on the brine giving up its latent heat to the brine.

Preferably, a well insulated greenhouse is utilized. The heat exchangers are operated during periods of low light levels such as at night. During such periods, heaters are operated as needed to maintain the temperature at a desired level. As a result, venting of the greenhouse is minimized. Air currents through the plant canopy are minimized because of the minimizing of the venting operation. Consequently, plant transpiration is minimized during these periods, and the heat load on the greenhouse is reduced as a consequence.

The preferred type of heat exchanger is in accordance with the disclosures in the above-identified patents and patent applications. A further description of such heat exchangers disclosed in these patents is contained in the article "LHC - The Latent Heat Converter" by G. Assaf appearing in Heat Recovery Systems, Vol. 6, No. 5, pp 369-379, 1966, which is hereby incorporated by reference. Such types of heat exchangers permit ventilation of air to and from the enclosure to be minimized and thus minimize the buoyancy flux because, when ventilation is minimized, the heated air in the enclosure will collect at the top of the enclosure. To enhance its efficiency, the latent heat converter can be supplemented with what is termed a night thermal screen which is an added layer of insulation applied to an enclosure at night to provide additional thermal protection against heat loss.

In a preferred embodiment of the invention, a heat exchanger similar to that disclosed in U.S. Patent No. 4,803,846 is used. As shown in Fig. 5, brine in reservoir 118 is pumped to air-brine-vapor heat exchanger 50 (shown as a brine shower) through which air in greenhouse 138, which preferably is well insulated, passes by reason of the operation of blower 51. After contacting the air and absorbing water vapor in the air, the brine returns to reservoir 118. Heat is supplied to the air in the enclosure, when necessary, by providing closed heat exchanger 52 in the path of the air exiting heat exchanger 50, heat exchanger 52 being supplied with hot water from boiler 40 used to regenerate dilute brine.

The regeneration process is carried out by contacting dilute brine collected in reservoir 118 with air extracted from the enclosure by the operation of blower 57 via vent 60 to the atmosphere. The brine is contacted with the air at 56 after the air is heated to a temperature above that of the brine by heat exchanger 54 supplied with water from the boiler 40. The result is that the dilute brine gives up water to the air and is concentrated before being returned to reservoir 118. Preferably, reservoir 55 and pump 53 are provided for ensuring a relatively high brine flow rate (approximately 1000 liters per hour) at direct contact air-brine-vapor heat exchanger 56, with concentrated brine being returned to reservoir 118 via overflow conduit 61. Heat contained in the air that is vented is extracted and returned to the enclosure by the provision of heat exchange surface 58 contacted on one side by air in the enclosure, and heat exchange surface 62, acting as an air heat recuperator, for transferring heat to air entering the enclosure. Thus, air entering the enclosure to replace the air that is, preferably, solely withdrawn by the regenerator is heated; and the buoyancy flux is reduced. Preferably, the flow rate of enclosure air across heat exchange surface 58 is relatively large (e.g., about 10,000 kg/h), and a fan (not shown) is preferably used to enhance the flow of enclosure air. Such flow across surface 58 is larger than the flow rate of air exiting the regenerator and flowing across heat exchange surface 62 (e.g., about 2000 kg/h).

Preferably, the air entrance to the enclosure is located in the upper portion of the enclosure to further reduce the buoyancy flux. In variations, the closed heat exchangers 52 and 54 could be eliminated, and heating can be effected using flue gases as indicated in US-A-4 803 846.

While the foregoing description refers to night-time as an example of a period of low light level, the present invention is specifically applicable to other periods of time of low light levels such as may occur during periods of cold, cloudy, misty, or rainy weather, etc.

The advantages and improved results furnished by the apparatus of the present invention are apparent from the foregoing description of the preferred embodiment of the invention. Various changes and modifications may be made without departing from the scope of the invention as described in the appended claims.

## Claims

1. Apparatus comprising a greenhouse (20;138) containing growing plants (22) defining a plant canopy within the greenhouse, the apparatus including:

   a) dehumidifying means comprising a first air-brine-vapor heat exchanger (50) for contacting air in the greenhouse (138) with concentrated brine supplied from a reservoir (118) and thereby dehumidifying the air and producing dilute brine that is returned to the reservoir;
   b) greenhouse heating means for heating the air in the greenhouse; and
   c) ventilating means (57,60) for exhausting air from the greenhouse to the atmosphere; characterised in that it further includes
   d) a second air-brine-vapor heat exchanger (56) supplied with brine from the reservoir (118) for contacting air exhausted from the greenhouse; and
   e) means (54) for heating the exhausted air before it contacts the second heat exchanger (56);
   f) the second heat exchanger (56) being constructed and arranged so that the heated air evaporates water from the contacted brine for concentrating the same before the latter is returned to the reservoir (118) and for increasing the humidity of the exhausted air;
   g) the said means operating so as to reduce the rate of convective heat flow of air through the plant canopy during periods of low light levels.

2. Apparatus as claimed in claim 1, including heat exchanger means (58;62) for contacting the exhausted humidified air to transfer heat contained therein back to the greenhouse.

3. Apparatus as claimed in claim 1 or 2, wherein the first heat exchanger (56) is constructed and arranged such that it operates under conditions of constant enthalpy.

4. Apparatus as claimed in any of claims 1 to 3, wherein the greenhouse is a well insulated greenhouse.

5. Apparatus as claimed in any of claims 1 to 4, including an additional layer of insulation which can be applied to the greenhouse to provide additional thermal protection against heat loss during periods of low light levels.

## Patentansprüche

1. Vorrichtung, die ein Gewächshaus (20; 138) aufweist, das wachsende Pflanzen (22) enthält, die ein Pflanzendach innerhalb des Gewächshauses abgrenzen, wobei die Vorrichtung umfaßt:

   a) eine Trocknungseinrichtung, die einen ersten Luft-Kühlsole-Dampf-Wärmetauscher (50) aufweist, bei dem die Luft im Gewächshaus (138) mit der konzentrierten Kühlsole, die von einem Behälter (118) zugeführt wird, in Berührung kommt, wodurch die Luft getrocknet wird und eine verdünnte Kühlsole erzeugt wird, die zum Behälter zurückgeführt wird;
   b) eine Heizvorrichtung für das Gewächshaus, um die Luft im Gewächshaus zu erwärmen; und
   c) eine Entlüftungseinrichtung (57, 60) für das Absaugen der Luft aus dem Gewächshaus in die Atmosphäre; dadurch gekennzeichnet, daß sie außerdem umfaßt:
   d) einen zweiten Luft-Kühlsole-Dampf-Wärmetauscher (56), der mit der Kühlsole vom Behälter (118) versorgt wird, und der mit der aus dem Gewächshaus abgesaugten Luft in Berührung zu kommen; und
   e) eine Einrichtung (54) für die Erwärmung der abgesaugten Luft, bevor sie mit dem zweiten Wärmetauscher (56) in Berührung kommt;
   f) wobei der zweite Wärmetauscher (56) so konstruiert und angeordnet ist, daß die erwärmte Luft das Wasser aus der Kühlsole verdampft, mit der es zu einer Berührung kommt, um diese zu konzentrieren, bevor die Kühlsole zum Behälter (118) zurückgeführt wird, und- um die Feuchtigkeit der abgesaugten Luft zu erhöhen;
   g) wobei die Vorrichtung so funktioniert, daß die Geschwindigkeit des konvektiven Wärmeflusses der Luft durch das Pflanzendach während der Zeit der niedrigen Lichtintensität reduziert wird.

2. Vorrichtung nach Anspruch 1, die eine Wärmetauschereinrichtung (58; 62) umfaßt, die mit der abgesaugten befeuchteten Luft in Berührung kommt, um die darin enthaltene Wärme zum Gewächshaus zurückzubringen.

3. Vorrichtung nach Anspruch 1 oder 2, bei der der erste Wärmetauscher (56) so konstruiert und angeordnet ist, daß er unter den Bedingungen einer konstanten Enthalpie funktioniert.

4. Vorrichtung nach einem der Ansprüche 1 bis 3, bei der das Gewächshaus ein gut isoliertes Gewächshaus ist.

5. Vorrichtung nach einem der Ansprüche 1 bis 4, die eine zusätzliche Isolationsschicht umfaßt, die auf das Gewächshaus aufgebracht werden kann, um einen zusätzlichen Wärmeschutz gegen einen Wärmeverlust während der Zeit der niedrigen Lichtintensität zur Verfügung zu stellen.

**Revendications**

1. Appareil comprenant une serre (20; 138) contenant des plantes en croissance (22) définissant une verrière de plantes à l'intérieur de la serre, l'appareil englobant:

   a) un moyen de déshumidification comprenant un premier échangeur de chaleur air-saumure-vapeur (50) pour contacter l'air dans la serre (138), de la saumure concentrée provenant d'un réservoir (118), entraînant ainsi la déshumidification de l'air et la production de saumure diluée qui est ramenée au réservoir;
   b) un moyen de chauffage de la serre pour chauffer l'air dans la serre; et
   c) un moyen de ventilation (57, 60) pour assurer l'évacuation de l'air de la serre vers l'atmosphère; caractérisé en ce qu'il englobe en outre:
   d) un deuxième échangeur de chaleur air-saumure-vapeur (56) alimenté en saumure provenant du réservoir (118) pour contacter l'air évacué de la serre; et
   e) un moyen (54) pour chauffer l'air évacué avant qu'il ne contacte le deuxième échangeur de chaleur (56);
   f) le deuxième échangeur de chaleur (56) étant construit et agencé de sorte que l'air chauffé évapore de l'eau de la saumure contactée en vue de la concentrer avant qu'elle ne retourne au réservoir (118) et pour accroître l'humidité de l'air évacué;
   g) ledit moyen fonctionnant de sorte à réduire le débit du courant de chaleur convective à travers la verrière des plantes pendant les périodes de faible éclairement.

2. Appareil selon la revendication 1, englobant un moyen échangeur de chaleur (58; 62) pour contacter l'air humidifié évacué et faire retourner la chaleur qui y est contenue vers la serre.

3. Appareil selon les revendications 1 ou 2, dans lequel le premier échangeur de chaleur (56) est construit et agencé de sorte à fonctionner dans des conditions d'enthalpie complète.

4. Appareil selon l'une quelconque des revendications 1 à 3, dans lequel la serre est une serre bien isolée.

5. Appareil selon l'une quelconque des revendications 1 à 4, englobant une couche isolante additionnelle pouvant être appliquée sur la serre pour assurer une protection thermique additionnelle contre une perte de chaleur au cours des périodes de faible éclairement.

FIG. 1
(PRIOR ART)

GREEN-
HOUSE

HEATED AIR
OUT
12
COLD AIR
IN
VENTILATION

10

T+ΔT

T          T

13

11

HEATER

FIG. 2
(PRIOR ART)

HEATED AIR
OUT
17
VENTILATION

15

16

T+ΔT

18

DOUBLY INSULATED
GREENHOUSE

19    HEATER

COLD AIR
IN

FIG. 4

FIG. 3

PLANTS PRODUCE
WATER VAPOR
DURING NIGHTIME
TRANSPIRATION

VENTILATE
ENCLOSURE
TO REDUCE
HUMIDITY

ADD
HEAT

REMOVE
MOISTURE,
LATENT
HEAT AND
SENSIBLE
HEAT

FROM
EXTERNAL
SOURCE

SUNSET                                    SUNRISE

HEATING
CYCLES

TIME

HUMIDITY
AND TEMP.
CYCLES

VENTILATE (TYP)

7

FIG. 5

EP 0 397 458 B1